# EUROPEAN PATENT APPLICATION

(11) **EP 4 451 022 A1**
(43) Date of publication of application: **23.10.2024**
(21) Application number: 22907366.3
(22) Date of filing: 08.12.2022
(51) Int. Cl.: G02B 6/036, B23K 26/064, G02B 6/42, H01S 3/091, H01S 3/10

(54) **OPTICAL COMBINER AND LASER SYSTEM**

(30) Priority: 14.12.2021 JP 2021202646
(71) Applicant: Fujikura Ltd., Tokyo 135-8512 (JP)
(72) Inventor: SAKAMOTO, Shinichi, Sakura-shi, Chiba 285-8550 (JP)
(74) Representative: Plasseraud IP
(86) International application number: PCT/JP2022/045382
(87) International publication number: WO 2023/112839

(57) **Abstract**

A first optical combiner 4A includes a core 11, a plurality of first input optical fibers 10 including a first cladding 12a surrounding the core 11 and having a refractive index lower than a refractive index of the core 11, a second cladding 12b surrounding the first cladding 12a and having a refractive index lower than the refractive index of the first cladding 12a, and a third cladding 12c surrounding the second cladding 12b and having a refractive index lower than the refractive index of the second cladding 12b, and a first bridge fiber 20 including an incident surface 26 optically coupled to the cores 11 of the plurality of first input optical fibers 10 and an emitting surface 27 emitting light obtained by combining light incident from the respective first input optical fibers 10.

## Description

### Technical Field

The present invention relates to an optical combiner and a laser system.

### Background Art

As one of methods for achieving high output of a laser system, a method has been known in which laser beams emitted from a plurality of optical fibers are collectively output from one optical fiber. Patent Literature 1 below discloses such a laser system.

In this example of the laser system, the plurality of input optical fibers connected to the optical combiner includes a core, a cladding surrounding an outer peripheral surface of the core and having a refractive index lower than a refractive index of the core, and a covering layer covering a periphery of the clad. Lights propagating through the cores of the respective optical fibers enter the optical combiner, is multiplexed, and is emitted from an emission end.
[Patent Literature 1] JP 2021-150527 A

### Summary of Invention

In a fiber laser system, light reflected by a workpiece may again enter an optical fiber and become return light. The return light may enter the plurality of input optical fibers from the optical combiner. In the case of the laser system disclosed in Patent Literature 1 described above, in a case where the return light enters the cladding of the input optical fiber from the optical combiner, the light may propagate from the cladding to the covering layer and be absorbed by the covering layer. When light is absorbed by the covering layer, a temperature of the covering layer tends to increase, and there is a concern that reliability may decrease.

Therefore, an object of the present invention is to provide an optical combiner and a laser system that can improve reliability.

In order to solve the above problem, a first aspect of the present invention is to provide an optical combiner, including: including a core, a first cladding surrounding the core and having a refractive index lower than a refractive index of the core, a second cladding surrounding the first cladding and having a refractive index lower than the refractive index of the first cladding, and a third cladding surrounding the second cladding and having a refractive index lower than the refractive index of the second cladding; and a bridge fiber having an incident surface optically coupled to the cores of the plurality of input optical fibers and an emitting surface that emits light obtained by multiplexing the light incident from each of the input optical fibers.

According to such an optical combiner, in a case where return light from the bridge fiber is incident on an area surrounded by the third cladding of the input optical fiber, the return light is easily guided in this area. Therefore, it is possible to prevent the return light incident on the input optical fiber from propagating outside the third cladding. Therefore, it is possible to suppress an increase in temperature due to absorption of light by dust or the like in contact with the outer peripheral surface of the input optical fiber, and to enhance reliability.

A second aspect of the present invention is to provide the optical combiner according to the first aspect, further including a fourth cladding surrounding the second cladding between the second cladding and the third cladding and having a refractive index higher than the refractive index of the second cladding.

In this case, the second cladding can function as a trench layer, and loss of light propagating inside the second cladding can be suppressed.

A third aspect of the present invention is to provide the optical combiner according to the second aspect, in which a numerical aperture of the second cladding is larger than a numerical aperture of the third cladding.

In this case, return light incident on the fourth cladding from the bridge fiber is more likely to propagate to the second cladding than to the third cladding, and the amount of return light propagating to the third cladding can be reduced.

A fourth aspect of the present invention is to provide the optical combiner according to any one of the first to third aspects, in which the third cladding is an outermost layer of the cladding of the input optical fiber.

In this case, only the light incident on the third cladding can reach an outer circumferential surface. Therefore, the amount of light propagating to the outer peripheral surface of the input optical fiber can be reduced.

A fifth aspect of the present invention is to provide the optical combiner according to any one of the first to fourth aspects, in which a GRIN lens that emits light from the input optical fiber to the bridge fiber at a divergence angle smaller than that at the time of incidence is disposed between the core of at least one of the input optical fibers and the incident surface of the bridge fiber.

According to such a combiner, since the divergence angle becomes small when the light from the input optical fiber enters the bridge fiber, the light leaking from the bridge fiber can be suppressed, and the divergence angle of the light emitted from the bridge fiber can be suppressed to be small.

A sixth aspect of the present invention is to provide a laser system including: an optical combiner according to any one of the first to fifth aspects; and a plurality of light sources that emits light individually entering the cores of the respective input optical fibers.

A seventh aspect of the present invention is to provide the laser system according to the sixth aspect, further including a plurality of light source optical fibers that individually and optically connect the light sources and the input optical fibers, in which each light source optical fiber includes a core, a first cladding surrounding the core and having a refractive index lower than a refractive index of the core, a second cladding surrounding the first cladding and having a refractive index lower than the refractive index of the first cladding, and a third cladding surrounding the second cladding and having a refractive index lower than the refractive index of the second cladding.

As described above, in the optical combiner of the present invention, it is possible to suppress a rise in temperature due to absorption of light by dust or the like touching the outer peripheral surface of the input optical fiber, and to enhance reliability. Therefore, such a laser system can enhance reliability.

As described above, according to the present invention, an optical combiner and a laser system capable of improving reliability are provided.

### Brief Description of Drawings

FIG. 1 is a conceptual diagram illustrating a laser system according to an embodiment of the present invention.
FIG. 2 is an exploded view illustrating a first optical combiner and a second optical combiner in FIG. 1.
FIG. 3 is a diagram illustrating a relationship between a structure and a refractive index profile of the first input optical fiber of FIG. 2.
FIG. 4 is a diagram illustrating a structure of the second bridge fiber of FIG. 2 and a positional relationship between the second bridge fiber, the second input optical fiber, and an intermediate optical fiber.
FIG. 5 is an exploded view illustrating a modification of the optical combiner.

### Description of Embodiments

Hereinafter, preferred embodiments of an optical combiner and a laser system according to the present invention will be described in detail with reference to the drawings. The embodiments exemplified below are intended to facilitate understanding of the present invention and are not intended to limit the present invention. The present invention can be modified and improved without departing from the spirit thereof. In the drawings referred to below, dimensions of each member may be changed for easy understanding.

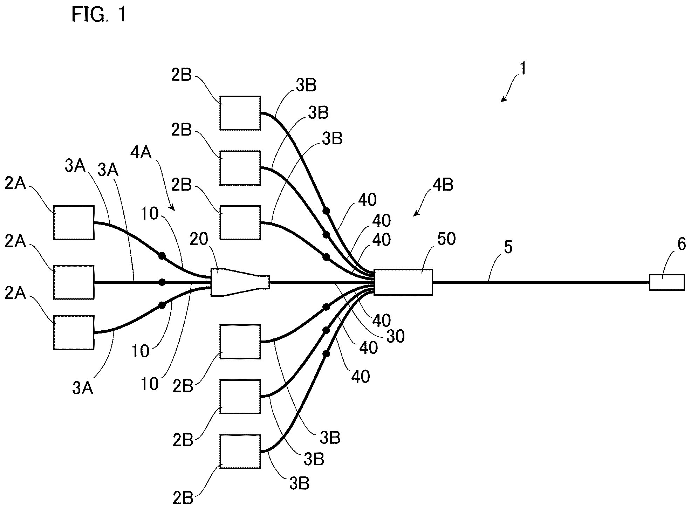

FIG. 1 is a conceptual diagram illustrating a laser system according to a first embodiment of the present invention. As illustrated in FIG. 1, a laser system 1 of the present embodiment mainly includes a plurality of first light sources 2A, a plurality of first light source optical fibers 3A, a first optical combiner 4A, a plurality of second light sources 2B, a plurality of second light source optical fibers 3B, a second optical combiner 4B, a delivery fiber 5, and a light emitting unit 6.

Each of the first light sources 2A and each of the second light sources 2B are laser devices that emit light of a predetermined wavelength, and include, for example, a fiber laser device or a solid-state laser device. In a case where the first light sources 2A and the second light sources 2B are fiber laser devices, the first light sources 2A and the second light sources 2B are resonator fiber laser devices or master oscillator power amplifier (MO-PA) fiber laser devices. The light emitted from each of the first light sources 2A and the second light sources 2B is, for example, light having a wavelength of 1070 nm. In the present embodiment, an example is illustrated in which the number of first light sources 2A is three and the number of second light sources 2B is six. However, the number of the first light sources 2A and the second light sources 2B is not limited thereto. In addition, the first light sources 2A and the second light sources 2B may emit light of wavelengths different from each other. One end of a first light source optical fiber 3A that propagates light emitted from the first light source 2A is connected to each of the first light sources 2A. The other end of each of the first light source optical fibers 3A is connected to the first optical combiner 4A. One end of the second light source optical fiber 3B that propagates light emitted from the second light source 2B is connected to each of the second light sources 2B. The other end of each of the second light source optical fibers 3B is connected to the second optical combiner 4B.

One end of an intermediate optical fiber 30 is connected to a side of the first optical combiner 4A opposite to a side to which the first light source optical fiber 3A is connected. The other end of the intermediate optical fiber 30 is connected to the second optical combiner 4B. One end of the delivery fiber 5 is connected to a side of the second optical combiner 4B opposite to a side to which the second light source optical fiber 3B is connected, and the light emitting unit 6 is connected to the other end of the delivery fiber 5.

Next, the first optical combiner 4A and the second optical combiner 4B will be described.

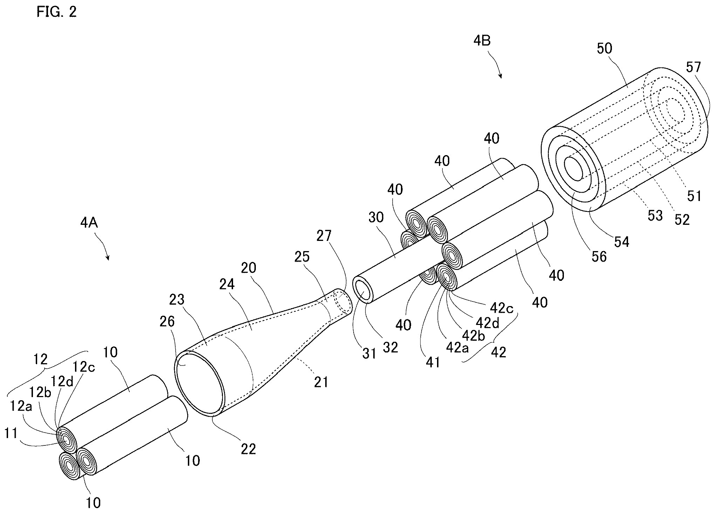

FIG. 2 is an exploded view illustrating the first optical combiner 4A and the second optical combiner 4B in FIG. 1. As illustrated in FIG. 2, the first optical combiner 4A includes a plurality of first input optical fibers 10 and a first bridge fiber 20, and the second optical combiner 4B includes a plurality of second input optical fibers 40 and a second bridge fiber 50.

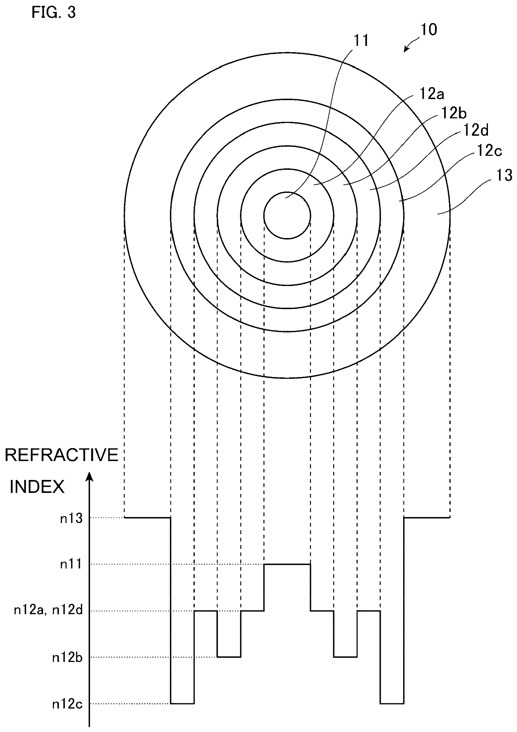

FIG. 3 is a diagram illustrating a relationship between a structure and a refractive index profile of the first input optical fiber 10. In the present embodiment, the first input optical fiber 10 is a multimode fiber. As illustrated in FIG. 3, each of the first input optical fibers 10 includes a core 11, a cladding 12, and a covering layer 13. The cladding 12 includes a first cladding 12a surrounding an outer peripheral surface of the core 11, a second cladding 12b surrounding an outer peripheral surface of the first cladding 12a, a fourth cladding 12d surrounding an outer peripheral surface of the second cladding 12b, and a third cladding 12c surrounding the outer peripheral surface of the fourth cladding 12d. Therefore, the third cladding 12c also surrounds the outer peripheral surface of the second cladding 12b, and the fourth cladding 12d surrounds the outer peripheral surface of the second cladding 12b between the second cladding 12b and the third cladding 12c. In the present embodiment, the first cladding 12a is in close contact with the core 11. The second cladding 12b is in close contact with the first cladding 12a. The fourth cladding 12d is in close contact with the second cladding 12b. The third cladding 12c is in close contact with the fourth cladding 12d and is an outermost layer of the cladding 12.

The core 11 is made of, for example, silica glass doped with a dopant such as germanium that increases the refractive index, and a refractive index n11 of the core 11 is higher than a refractive index of all the areas of the cladding 12. The first cladding 12a is made of, for example, silica glass to which no dopant is added, and has a refractive index n12a lower than a refractive index n11 of the core 11. The second cladding 12b is made of, for example, silica glass doped with a dopant such as fluorine for reducing the refractive index, and has a refractive index n12b lower than a refractive index n12a of the first cladding 12a. The fourth cladding 12d is made of, for example, the same material as the first cladding 12a, and has a refractive index n12d higher than the refractive index n12b of the second cladding 12b. In the example of FIG. 3, an example in which a refractive index n12d of the fourth cladding 12d and the refractive index n12a of the first cladding 12a are the same is illustrated, but the refractive index n12d of the fourth cladding 12d may be higher or lower than the refractive index n12a of the first cladding 12a. The third cladding 12c is made of, for example, silica glass doped with more dopant such as fluorine for reducing the refractive index than the second cladding 12b, and has a refractive index n12c lower than the refractive index n12b of the second cladding 12b. With such a refractive index profile, a numerical aperture of the second cladding 12b is larger than a numerical aperture of the third cladding 12c.

The covering layer 13 covers an outer peripheral surface of the cladding 12, and has a refractive index n13 higher than the refractive index of the core 11 in the present embodiment. At an end of each of the first input optical fibers 10, the covering layer 13 is peeled off, and the description of the covering layer 13 is omitted in FIG. 2. One end of each of the first input optical fibers 10 is individually connected to the other end of each of the first light source optical fibers 3A at connection portions indicated by black circles in FIG. 1.

The first bridge fiber 20 includes a core 21 and a cladding 22 surrounding the outer peripheral surface of the core 21. The core 21 is made of, for example, silica glass to which a dopant such as germanium for increasing the refractive index is added, the cladding 22 is made of, for example, silica glass to which no dopant is added, and the refractive index of the core 21 is higher than the refractive index of the cladding 22. In addition, the first bridge fiber 20 is a tapered fiber in which an outer diameter on one side is not reduced and an outer diameter on the other side is reduced, and includes a non-reduced diameter portion 23 that maintains a constant outer diameter on one side, a tapered portion 24 that is connected to the non-reduced diameter portion 23 and has an outer diameter gradually reduced from one side to the other side, and a reduced diameter portion 25 that is connected to the reduced diameter side of the tapered portion 24 and has an outer diameter kept constant in a reduced state.

An end surface on one side of the first bridge fiber 20, which is an end surface of the non-reduced diameter portion 23, is a light incident surface 26, and the other end of each first input optical fiber 10 is connected to the incident surface 26. On the incident surface 26 of the first bridge fiber 20, the core 21 and the cores 11 of the respective first input optical fibers 10 are connected so as to be optically coupled. Therefore, a part of the cladding 12 of the first input optical fiber 10 may be connected to the cladding 22 of the first bridge fiber 20. From the viewpoint of suppressing the Fresnel reflection and the like, the refractive index n11 of the core 11 of the first input optical fiber 10 and the refractive index of the core 21 of the first bridge fiber 20 are preferably substantially equal to each other. An end surface on the other side of the first bridge fiber 20, which is an end surface of the reduced diameter portion 25 of the first bridge fiber 20, is a light emitting surface 27, and the emitting surface 27 is connected to one end of the intermediate optical fiber 30.

The intermediate optical fiber 30 includes a core 31 and a cladding 32 surrounding an outer peripheral surface of the core 31. A refractive index of the cladding 32 is lower than a refractive index of the core 31. A diameter of the core 31 of the intermediate optical fiber 30 is equal to or larger than a diameter of the core 21 on the emitting surface 27 of the first bridge fiber 20, and the first bridge fiber 20 and the intermediate optical fiber 30 are connected such that the core 21 on the emitting surface 27 of the first bridge fiber 20 is located in the core 31 at one end of the intermediate optical fiber 30. Therefore, light propagating through the core 21 of the first bridge fiber 20 can efficiently enter the core 31 of the intermediate optical fiber 30. From the viewpoint of suppressing the Fresnel reflection and the like, the refractive index of the core 21 of the first bridge fiber 20 and the refractive index of the core 31 of the intermediate optical fiber 30 are preferably substantially equal to each other.

The other end side of the intermediate optical fiber 30 is parallel to a part of each of the second input optical fibers 40. Each of the second input optical fibers 40 has the same configuration as that of the first input optical fiber 10. Therefore, each of the second input optical fibers 40 includes a core 41 and a cladding 42. The cladding 42 includes a first cladding 42a surrounding an outer peripheral surface of the core 41, a second cladding 42b surrounding an outer peripheral surface of the first cladding 42a, a third cladding 42c surrounding an outer peripheral surface of the second cladding 42b, and a fourth cladding 42d surrounding the outer peripheral surface of the second cladding 42b between the second cladding 42b and the third cladding 42c. In the present embodiment, the first cladding 42a is in close contact with the core 41. The second cladding 42b is in close contact with the first cladding 42a. The fourth cladding 42d is in close contact with the second cladding 42b. The third cladding 42c is in close contact with the fourth cladding 42d and is an outermost layer of the cladding 42.

The first cladding 42a has a refractive index lower than a refractive index of the core 41, and the second cladding 42b has a refractive index lower than the refractive index of the first cladding 42a. The third cladding 42c has a refractive index lower than a refractive index of the second cladding 42b. The fourth cladding 42d has a refractive index higher than the refractive index of the second cladding 42b. A numerical aperture of the second cladding 42b is larger than a numerical aperture of the third cladding 42c. However, the refractive indexes and diameters of the core 41 and the first cladding 42a to the fourth cladding 42d may be different from the refractive indexes and diameters of the core 11 of the first input optical fiber 10 and the first cladding 12a to the fourth cladding 12d. One end of each of the second input optical fibers 40 is individually connected to the other end of each of the second light source optical fibers 3B at a connection portion indicated by a black circle in FIG. 1.

In the second bridge fiber 50 of the second optical combiner 4B, an end surface on one side is a light incident surface 56, and an end surface on the other side is a light emitting surface 57. The other end of each of the second input optical fibers 40 and the other end of the intermediate optical fiber 30 are connected to the incident surface 56 of the second bridge fiber 50.

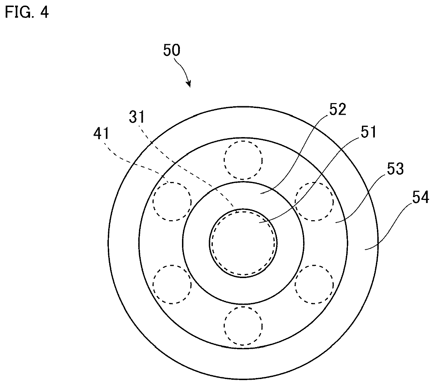

FIG. 4 is a diagram illustrating a structure of the second bridge fiber 50 and a positional relationship among the second bridge fiber 50, the second input optical fiber 40, and the intermediate optical fiber 30. As illustrated in FIG. 4, the second bridge fiber 50 includes a center core 51, an inner cladding 52 surrounding an outer peripheral surface of the center core 51, a ring core 53 surrounding an outer peripheral surface of the inner cladding 52, and an outer cladding 54 surrounding an outer peripheral surface of the ring core 53. The center core 51 and the ring core 53 are made of, for example, silica glass doped with a dopant such as germanium, and the inner cladding 52 and the outer cladding 54 are made of, for example, pure silica glass. The refractive indexes of the inner cladding 52 and the outer cladding are lower than the refractive indexes of the center core 51 and the ring core 53. In the example of FIG. 4, the refractive index of the center core 51 and the refractive index of the ring core 53 are equal to each other, and the refractive index of the inner cladding 52 and the refractive index of the outer cladding 54 are equal to each other. However, the refractive index of the center core 51 and the refractive index of the ring core 53 may be different from each other, and the refractive index of the inner cladding 52 and the refractive index of the outer cladding 54 may be different from each other.

As indicated by broken lines in FIG. 4, on the incident surface 56, the core 31 of the intermediate optical fiber 30 is connected to the center core 51 of the second bridge fiber 50, and the cores 41 of the respective second input optical fibers 40 are connected to the ring core 53. A diameter of the center core 51 is equal to or larger than a diameter of the core 31 of the intermediate optical fiber 30, and the intermediate optical fiber 30 and the second bridge fiber 50 are connected such that the core 31 at the other end of the intermediate optical fiber 30 is positioned in the center core 51 on the incident surface 56 of the second bridge fiber 50. Therefore, light propagating through the core 31 of the intermediate optical fiber 30 can efficiently enter the center core 51. A thickness of the ring core 53 is equal to or larger than a diameter of the core 41 of the second input optical fiber 40, and the second input optical fiber 40 and the second bridge fiber 50 are connected such that the core 41 at the other end of the second input optical fiber 40 is positioned in the ring core 53 on the incident surface 56 of the second bridge fiber 50. Therefore, light propagating through the core 41 of the second input optical fiber 40 can efficiently enter the ring core 53. From the viewpoint of suppressing the Fresnel reflection and the like, the refractive index of the core 31 of the intermediate optical fiber 30 and the refractive index of the center core 51 are preferably substantially equal to each other, and the refractive index of the core 41 of the second input optical fiber 40 and the refractive index of the ring core 53 are preferably substantially equal to each other.

The emitting surface 57 of the second bridge fiber 50 is connected to one end of the delivery fiber 5. The configuration of the delivery fiber 5 is, for example, similar to the configuration of the second bridge fiber 50. Therefore, the delivery fiber 5 includes a center core, an inner cladding surrounding an outer peripheral surface of the center core, a ring core surrounding the outer peripheral surface of the inner cladding, and an outer cladding surrounding an outer peripheral surface of the ring core. The center core 51 of the second bridge fiber 50 is connected to the center core of the delivery fiber 5, and the ring core 53 of the second bridge fiber 50 is connected to the ring core of the delivery fiber 5.

As described above, one end of each of the first input optical fibers 10 is individually connected to the other end of each of the first light source optical fibers 3A. One end of each of the second input optical fibers 40 is individually connected to the other end of each of the second light source optical fibers 3B. In the present embodiment, each of the first light source optical fibers 3A has a configuration similar to that of the first input optical fiber 10, and each of the second light source optical fibers 3B has a configuration similar to that of the second input optical fiber 40. Therefore, each of the first light source optical fibers 3A and each of the second light source optical fibers 3B include a core, a first cladding surrounding the core and having a refractive index lower than a refractive index of the core, a second cladding surrounding the first cladding and having a refractive index lower than the refractive index of the first cladding, a third cladding surrounding the second cladding and having a refractive index lower than the refractive index of the second cladding, and a fourth cladding surrounding the second cladding between the second cladding and the third cladding and having a refractive index higher than the refractive index of the second cladding. The cores of the respective first light source optical fibers 3A and the cores 11 of the respective first input optical fibers 10 are individually connected and optically coupled to each other, and the cores of the respective second light source optical fibers 3B and the cores 41 of the respective second input optical fibers 40 are individually connected and optically coupled to each other.

Therefore, the first cladding of each of the first light source optical fibers 3A and the first cladding 12a of each of the first input optical fibers 10 are individually connected. The second cladding of each of the first light source optical fibers 3A and the second cladding 12b of each of the first input optical fibers 10 are individually connected. The third cladding of each of the first light source optical fibers 3A and the third cladding 12c of each of the first input optical fibers 10 are individually connected. The fourth cladding of each of the first light source optical fibers 3A and the fourth cladding 12d of each of the first input optical fibers 10 are individually connected. Similarly, the first cladding of each of the second light source optical fibers 3B and the first cladding 42a of each of the second input optical fibers 40 are individually connected. The second cladding of each of the second light source optical fibers 3B and the second cladding 42b of each of the second input optical fibers 40 are individually connected. The third cladding of each of the second light source optical fibers 3B and the third cladding 42c of each of the second input optical fibers 40 are individually connected. The fourth cladding of each of the second light source optical fibers 3B and the fourth cladding 12d of each of the second input optical fibers 40 are individually connected.

In the laser system 1 having such a configuration, light emitted from each of the first light sources 2A propagates through the first light source optical fiber 3A, is emitted from the first input optical fiber 10 of the first optical combiner 4A, and is incident on the core 21 from the incident surface 26 of the first bridge fiber 20. The lights incident on the first bridge fiber 20 from the respective first input optical fibers 10 are multiplexed, reduced in diameter in the tapered portion 24, and incident on the intermediate optical fiber 30 from the core 21 on the emitting surface 27 of the reduced diameter portion 25. Light propagating through the intermediate optical fiber 30 enters the center core 51 of the second bridge fiber 50 in the second optical combiner 4B, and light propagating through the center core 51 is incident on the center core of the delivery fiber 5. The light propagated through the center core of the delivery fiber 5 is propagated to the light emitting unit 6, and the light having a substantially circular cross-sectional shape is emitted from the light emitting unit 6. The light emitted from each of the second light sources 2B propagates through the second light source optical fiber 3B, enters the ring core 53 from the incident surface 56 of the second bridge fiber 50 in the second optical combiner 4B, and is multiplexed. The multiplexed light is emitted from the ring core 53 on the emitting surface 57 of the second bridge fiber 50 and is incident on the ring core of the delivery fiber 5. The light propagating through the ring core of the delivery fiber 5 is propagated to the light emitting unit 6, and the light having a substantially ring cross-sectional shape is emitted from the light emitting unit 6.

The light emitted from the light emitting unit 6 is applied to a workpiece (not illustrated), and the workpiece is processed by the light. Incidentally, there is a case where a part of the light with which the workpiece is irradiated is reflected and is incident on the delivery fiber 5 from the light emitting unit 6 as return light. Return light propagating through the center core and the ring core of the delivery fiber 5 is incident on the center core 51 and the ring core 53 of the second bridge fiber 50. The return light propagating through the ring core 53 of the second bridge fiber 50 is incident on the core 41 and the cladding 42 of the second input optical fiber 40. The return light incident on the cladding 42 inside the third cladding 42c propagates inside the third cladding 42c while being reflected by the inner peripheral surface of the third cladding 42c. The return light propagating through the second input optical fiber 40 enters the core and the cladding of the second light source optical fiber 3B. The return light incident on the cladding of the second light source optical fiber 3B inside the third cladding propagates inside the third cladding while being reflected by the inner peripheral surface of the third cladding, enters the second light source 2B, and is appropriately processed in the second light source 2B. The return light propagating through the center core 51 of the second bridge fiber 50 is incident on the core 31 of the first bridge fiber 20 through the core 21 of the intermediate optical fiber 30. Light propagating through the core 21 enters the core 11 and the cladding 12 of the first input optical fiber 10. The return light incident on the cladding 12 inside the third cladding 12c propagates inside the third cladding 12c while being reflected by the inner peripheral surface of the third cladding 12c. The return light propagating through the first input optical fiber 10 enters the core and cladding of the first light source optical fiber 3A. The return light incident on the cladding of the first light source optical fiber 3A inside the third cladding propagates inside the third cladding while being reflected by the inner peripheral surface of the third cladding, enters the first light source 2A, and is appropriately processed in the first light source 2A.

When the first optical combiner 4A and the second optical combiner 4B described above are generalized to be optical combiners, the first input optical fiber 10 and the second input optical fiber 40 are generalized to be input optical fibers, and the first bridge fiber 20 and the second bridge fiber 50 are generalized to be bridge fibers, the following is obtained. That is, an optical combiner according to the present embodiment, includes: a plurality of input optical fibers each including a core, a first cladding surrounding the core and having a refractive index lower than a refractive index of the core, a second cladding surrounding the first cladding and having a refractive index lower than the refractive index of the first cladding, and a third cladding surrounding the second cladding and having a refractive index lower than the refractive index of the second cladding; and a bridge fiber having an incident surface optically coupled to the cores of the plurality of input optical fibers and an emitting surface that emits light obtained by multiplexing the light incident from each of the input optical fibers.

According to such an optical combiner, in a case where return light from the bridge fiber is incident on an area surrounded by the third cladding of the input optical fiber, the return light is easily guided in this area. Therefore, it is possible to prevent the return light incident on the input optical fiber from propagating outside the third cladding. Therefore, it is possible to suppress an increase in temperature due to absorption of light by dust or the like in contact with the outer peripheral surface of the input optical fiber, and to enhance reliability.

Furthermore, in the present embodiment, the input optical fiber further includes a fourth cladding surrounding the second cladding between the second cladding and the third cladding and having a refractive index higher than the refractive index of the second cladding. For this reason, the second cladding can function as a trench layer, and loss of light propagating inside the second cladding can be suppressed.

In the present embodiment, the numerical aperture of the second cladding of the input optical fiber is larger than the numerical aperture of the third cladding. For this reason, return light incident on the fourth cladding from the bridge fiber is more likely to propagate to the second cladding than to the third cladding, and the amount of return light propagating to the third cladding can be reduced.

In the present embodiment, the third cladding of the input optical fiber is an outermost layer of the cladding of the input optical fiber. For this reason, only the light incident on the third cladding can reach an outer circumferential surface. Therefore, the amount of light propagating to the outer peripheral surface of the input optical fiber can be reduced.

When the first light source 2A and the second light source 2B are generalized as light sources, the laser system 1 of the present embodiment is configured as follows. That is, the laser system 1 of the present embodiment includes the above-described optical combiner and a plurality of light sources that individually enter the cores of the respective input optical fibers. As described above, in the optical combiner of the present embodiment, it is possible to suppress a rise in temperature due to absorption of light by dust or the like touching the outer peripheral surface of the input optical fiber, and to enhance reliability. Therefore, such a laser system 1 can enhance reliability.

Furthermore, when the first light source optical fiber 3A and the second light source optical fiber 3B are generalized to be light source optical fibers, the laser system 1 of the present embodiment can be specified as follows. The laser system 1 according to the present embodiment further includes a plurality of light source optical fibers that individually and optically connect the light sources and the input optical fibers, in which each light source optical fiber includes a core, a first cladding surrounding the core and having a refractive index lower than a refractive index of the core, a second cladding surrounding the first cladding and having a refractive index lower than the refractive index of the first cladding, and a third cladding surrounding the second cladding and having a refractive index lower than the refractive index of the second cladding. With such a configuration, return light incident on an area surrounded by the third cladding of the optical fiber for a light source is easily guided in this area. Therefore, it is possible to prevent the return light incident on the light source optical fiber from propagating outside the third cladding. Therefore, it is possible to suppress an increase in temperature due to absorption of light by dust or the like in contact with the outer peripheral surface of the light source optical fiber, and to more enhance reliability.

### (Modification)

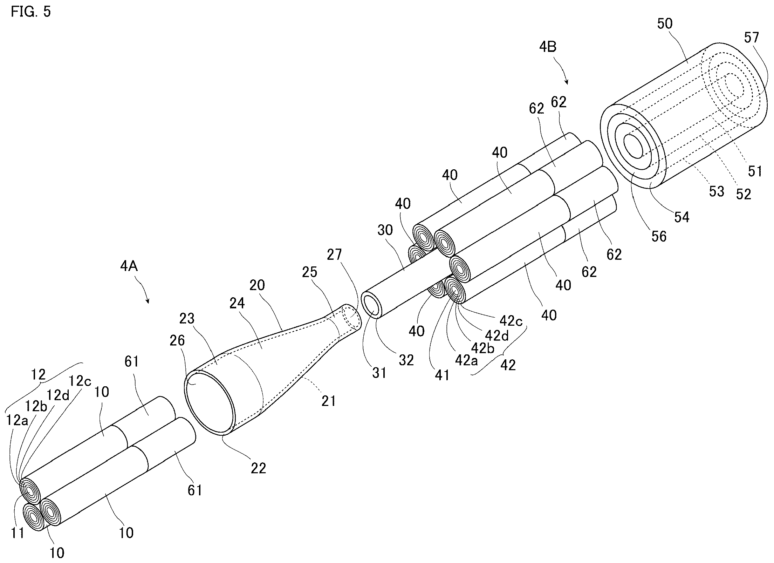

Next, modifications of the first optical combiner 4A and the second optical combiner 4B will be described in detail with reference to FIG. 5. Note that the same or equivalent constituent elements as described above are denoted by the same reference numerals, and redundant description will be omitted unless otherwise specified.

FIG. 5 is an exploded view illustrating a modification of the first optical combiner 4A and the second optical combiner 4B. As illustrated in FIG. 5, in the present modification, the first optical combiner 4A further includes a plurality of first GRIN lenses 61, each first GRIN lens 61 is disposed between the first input optical fiber 10 and the first bridge fiber 20, the second optical combiner 4B further includes a plurality of second GRIN lenses 62, and each second GRIN lens 62 is disposed between the second input optical fiber 40 and the second bridge fiber 50.

One end of each first GRIN lens 61 is individually connected to the other end of the first input optical fiber 10, and the other end is connected to the incident surface 26 of the first bridge fiber 20. The first GRIN lens 61 emits light incident from the first input optical fiber 10 to the core 21 of the first bridge fiber 20 at a divergence angle smaller than that at the time of incidence. One end of each of the second GRIN lenses 62 is individually connected to the other end of the second input optical fiber 40, and the other end is connected to the ring core 53 on the incident surface 56 of the second bridge fiber 50. The second GRIN lens 62 emits light incident from the second input optical fiber 40 to the ring core 53 of the second bridge fiber 50 at a smaller divergence angle than at the time of incidence. Also, in the present embodiment, the other end of the intermediate optical fiber 30 is connected to the incident surface 56 of the second bridge fiber 50.

According to the first optical combiner 4A and the second optical combiner 4B, since the divergence angle becomes small when the light from the first input optical fiber 10 or the second input optical fiber 40 is incident on the first bridge fiber 20 or the second bridge fiber 50, the light leaking from the first bridge fiber 20 or the second bridge fiber 50 can be suppressed, and the divergence angle of the light emitted from the first bridge fiber 20 or the second bridge fiber 50 can be suppressed to be small.

Although the present invention has been described by taking the embodiment as an example, the present invention is not limited thereto.

For example, the laser system 1 of the above embodiment includes the first optical combiner 4A and the second optical combiner 4B, but may be a laser system including one combiner.

The first bridge fiber 20 of the first optical combiner 4A of the above embodiment is a tapered fiber having the tapered portion 24, and the second bridge fiber 50 of the second optical combiner 4B is an optical fiber having the center core 51 and the ring core 53. However, the bridge fiber of the present invention is not limited to the above embodiment as long as the bridge fiber has an incident surface optically coupled to cores of a plurality of input optical fibers and an emitting surface that emits light obtained by multiplexing light incident from each input optical fiber. For example, the bridge fiber may be a double cladding fiber including a core, an inner cladding having a lower refractive index than that of the core, and an outer cladding having a lower refractive index than that of the inner cladding. In this case, for example, a plurality of pumping light sources that emit pumping light may be used as the plurality of light sources, light source optical fibers that are connected to the respective pumping light sources and propagate the pumping light may be connected to the inner cladding, and the pumping light propagating from the respective light source optical fibers may be multiplexed in the inner cladding. In this case, an amplification optical fiber having a double cladding structure similar to that of the bridge fiber and having a core doped with a rare earth element is connected to the bridge fiber, whereby a fiber laser device can be configured.

In the above embodiment, the input optical fiber has the fourth cladding between the second cladding and the third cladding. However, the input optical fiber may not have the fourth cladding, and the third cladding may be disposed on the outer peripheral surface of the second cladding.

In the above embodiment, the numerical aperture of the second cladding is larger than the numerical aperture of the third cladding, but the numerical aperture of the second cladding may be equal to or smaller than the numerical aperture of the third cladding.

In the above embodiment, the third cladding is the outermost layer of the cladding of the input optical fiber, but another cladding layer may be further provided on the outer periphery of the third cladding.

In the above embodiment, the light source optical fiber has the same configuration as the input optical fiber, but the light source optical fiber may have a configuration different from that of the input optical fiber. For example, in the light source optical fiber, the cladding may have a constant refractive index in the radial direction, and for example, in the light source optical fiber, the fourth cladding may be omitted from the input optical fiber of the above embodiment, and the third cladding may be disposed on the outer peripheral surface of the second cladding. In general, the optical fiber for a light source is often handled longer in the device than the input optical fiber of the optical combiner. Therefore, the optical fiber for a light source may have a larger confining force for light propagating through the core than the input optical fiber. In this case, for example, the light source optical fiber may be an optical fiber having the fourth cladding as in the embodiment, and the input optical fiber of the optical combiner may be an optical fiber having no fourth cladding as described above. In addition, for example, even when each of the light source optical fiber and the input optical fiber has the first cladding to the fourth cladding as in the embodiment, from the viewpoint of increasing the optical confinement force of the light source optical fiber, the refractive index difference between the second cladding and the fourth cladding in the light source optical fiber may be larger than the refractive index difference between the second cladding and the fourth cladding in the input optical fiber.

As described above, according to the present invention, an optical combiner and a laser system capable of improving reliability are provided, and can be used for a machining laser system, a medical laser system, and the like.

## Claims

1. An optical combiner, comprising:
a plurality of input optical fibers each including a core, a first cladding surrounding the core and having a refractive index lower than a refractive index of the core, a second cladding surrounding the first cladding and having a refractive index lower than the refractive index of the first cladding, and a third cladding surrounding the second cladding and having a refractive index lower than the refractive index of the second cladding; and
a bridge fiber having an incident surface optically coupled to the cores of the plurality of input optical fibers and an emitting surface that emits light obtained by multiplexing the light incident from each of the input optical fibers.

2. The optical combiner according to claim 1, further comprising a fourth cladding surrounding the second cladding between the second cladding and the third cladding and having a refractive index higher than the refractive index of the second cladding.

3. The optical combiner according to claim 2, wherein
a numerical aperture of the second cladding is larger than a numerical aperture of the third cladding.

4. The optical combiner according to any one of claims 1 to 3, wherein
the third cladding is an outermost layer of the cladding of the input optical fiber.

5. The optical combiner according to any one of claims 1 to 4, wherein
a GRIN lens that emits light from the input optical fiber to the bridge fiber at a divergence angle smaller than that at the time of incidence is disposed between the core of at least one of the input optical fibers and the incident surface of the bridge fiber.

6. A laser system comprising:
an optical combiner according to any one of claims 1 to 5; and
a plurality of light sources that emits light individually entering the cores of the respective input optical fibers.

7. The laser system according to claim 6, further comprising
a plurality of light source optical fibers that individually and optically connect the light sources and the input optical fibers, wherein
each light source optical fiber includes a core, a first cladding surrounding the core and having a refractive index lower than a refractive index of the core, a second cladding surrounding the first cladding and having a refractive index lower than the refractive index of the first cladding, and a third cladding surrounding the second cladding and having a refractive index lower than the refractive index of the second cladding.
